# EUROPEAN PATENT SPECIFICATION

(11) **EP 4 406 758 B1**
(45) Date of publication and mention of the grant of the patent: **02.12.2026**
(21) Application number: 24150963.7
(22) Date of filing: 09.01.2024
(51) Int. Cl.: B60C 1/00, C08L 7/00, C08L 9/00

(54) **TIRE**
REIFEN
PNEUMATIQUE

(30) Priority: 27.01.2023 JP 2023010590
(43) Date of publication of application: 31.07.2024
(73) Proprietor: Sumitomo Rubber Industries, Ltd., Kobe-shi, Hyogo 651-0072 (JP)
(72) Inventor: Omura, Naoya, Kobe-shi, 651-0072 (JP)
(74) Representative: J A Kemp LLP

(56) References cited:
- EP-B1- 3 782 823

## Description

### TECHNICAL FIELD

The present invention relates to a tire.

### BACKGROUND OF THE INVENTION

In recent years, from the viewpoint of environmental burden, a tire has been required for having improved fuel efficiency and abrasion resistance. On the other hand, a global tire production is on the rise, and accordingly an amount of a natural rubber used is also on the rise. However, a rubber tree is only grown in a subtropical region, which makes a stable supply and price unstable. Therefore, there has been required for a raw material of a natural rubber instead of the rubber tree.

Russian dandelion is a single annual plant that grows in a temperate region and has a wide range of cultivable lands in Asia, North America, and Europe, and therefore it can disperse a supply risk of a natural rubber (see JP 2020-193292 A).

### SUMMARY OF THE INVENTION

However, a Russian dandelion-derived natural rubber tends to have a large molecular weight, which makes it difficult to be kneaded uniformly with other rubber components, and dispersibility of a filler such as carbon black and the like deteriorates, which does not ensure a mechanical strength of a rubber composition, so that abrasion resistance of a tire tends to decrease.

It is an object of the present invention to provide a tire composed of a rubber composition comprising a Russian dandelion-derived natural rubber, the tire having improved overall performance of fuel efficiency and abrasion resistance.

The present invention relates to a tire and a method of producing a rubber composition below:
A tire comprising a tread part,
wherein the tread part is composed of a rubber composition comprising a rubber component,
wherein the rubber component comprises a Russian dandelion-derived natural rubber and a butadiene rubber, and
wherein an average domain width D, which is measured by ternarizing an image of the butadiene rubber obtained using an atomic force microscope (AFM), is 370 nm or less.

According to the present invention, provided is a tire composed of a rubber composition comprising a Russian dandelion-derived natural rubber, the tire having improved overall performance of fuel efficiency and abrasion resistance.

### BRIEF DESCRIPTION OF THE DRAWINGS

FIG. 1 is a meridional cross-sectional view of a tire relating to one embodiment of the present invention.
FIG. 2 is a cross-sectional view of a tread part of the tire relating to one embodiment of the present invention.
FIG. 3 is an enlarged cross-sectional view showing a part of a circumferential groove relating to one embodiment of the present invention.
FIG. 4 is a conceptual diagram of an atomic force micrograph showing a distribution state of a filler.

### DETAILED DESCRIPTION

Although it not intended to be bound by theory, for example, the following can be considered as a mechanism in which effects of the present invention are exhibited.

First, regarding abrasion resistance, when the rubber component comprises a butadiene rubber, dispersibility of a filler such as carbon black and the like improves even when the rubber component comprises a Russian dandelion-derived natural rubber, ensuring a mechanical strength of a rubber composition, so that abrasion resistance is improved (1). Moreover, regarding fuel efficiency, heat generation is suppressed, so that low heat generation is improved (2). Furthermore, since the butadiene rubber and the Russian dandelion-derived natural rubber naturally differ in hardness of a polymer, they are difficult to be kneaded uniformly. However, by setting a predetermined average domain width D to 370 nm or less, each rubber component can be prevented from deviating in a rubber phase (3). Then, with cooperation of the above-described (1) to (3), a remarkable effect of providing a tire composed of a rubber composition comprising a Russian dandelion-derived natural rubber, the tire having improved overall performance of fuel efficiency and abrasion resistance, is achieved.

A first embodiment of the present invention relates to a tire comprising a tread part, wherein the tread part is composed of a rubber composition comprising a rubber component, wherein the rubber component comprises a Russian dandelion-derived natural rubber and a butadiene rubber, and wherein an average domain width D, which is measured by ternarizing an image of the butadiene rubber obtained using an atomic force microscope (AFM), is 370 nm or less.

A thickness T of the tread part is preferably 15.0 mm or less.

When T is 15.0 mm or less, an amount of a rubber in the entire tire is reduced, so that it is considered that low heat generation is further improved.

A product (D×T) of D and the thickness T, in mm, of the tread part is preferably 2,750 or less.

When D×T is 2750 or less, a polymer has a high uniformity and stress is dispersed, so that it is considered that fuel efficiency and abrasion resistance are further improved.

A difference ΔG* between a complex elastic modulus G*a, in MPa, at 0.25% torsional shear at 70°C of the rubber composition and a complex elastic modulus G*b, in MPa, at 1.0% torsional shear at 70°C of the rubber composition is preferably 0.5 MPa or less.

When ΔG* is 0.5 MPa or less, it is considered that dispersibility of a filler such as carbon black and the like is improved, fracture characteristics of a rubber composition is improved, and abrasion resistance is further improved.

A product (T×ΔG*) of T, in mm, and ΔG* is preferably 5.0 or less from the viewpoint of dispersibility of a filler.

A tan δ at 70°C (70°C tan δ) of the rubber composition is preferably 0.15 or less from the viewpoint of fuel efficiency.

A product (T×70°C tan δ) of T, in mm, and 70°C tan δ is preferably 2.25 or less from the viewpoint of fuel efficiency.

A weight-average molecular weight (Mw) of the Russian dandelion-derived natural rubber as measured by FFF-MALS is preferably 5,000,000 or more. Moreover, a molecular weight distribution (Mw/Mn) is preferably 2.0 or more.

When the molecular weight of the Russian dandelion-derived natural rubber is increased, it is considered that fracture characteristics of a rubber composition is improved and abrasion resistance is further improved.

A tan δ at 30°C (30°C tan δ) of the rubber composition is preferably 0.30 or less from the viewpoint of fuel efficiency.

**It** is preferable that the tread part is provided with at least one circumferential groove extending continuously in a tire circumferential direction and that a groove depth at the deepest part of the circumferential groove is greater than 1.0 mm and less than 3.0 mm.

When the groove depth of the deepest part of the circumferential groove is set within the above-described range, it is considered that fuel efficiency and abrasion resistance are further improved.

**It** is preferable that the tread part is provided with at least one circumferential groove extending continuously in the tire circumferential direction and that at least one groove wall of the circumferential groove is provided with a recessed part recessed outward in a groove width direction with respect to a groove edge appearing on a tread surface of the tread part.

When the groove wall of the circumferential groove is provided with such a recessed part, a gap is formed inside the tread, so that it is considered that the gap can absorb impact and suppress propagation of the impact.

In the case where a land ratio of the tread surface of the tread part is defined as C, a product (A×C) of a content A, in % by mass, of the Russian dandelion-derived natural rubber in the rubber component in the rubber composition and C is 81 or less.

When A×C is set within the above-described range, the land ratio is decreased even if the content of the Russian dandelion-derived natural rubber is increased, so that it is considered that abrasion resistance can be further improved.

A second embodiment of the present invention relates to a method of producing a rubber composition for tire tread that comprises a rubber component comprising a Russian dandelion-derived natural rubber and a butadiene rubber,
wherein an average domain width D, which is measured by ternarizing an image of the butadiene rubber obtained using an atomic force microscope (AFM), of the rubber composition is 370 nm or less, and
wherein the method comprises the step of kneading a rubber component and an additive in a kneading machine equipped with a rotor, the step comprising the substeps of:
   (1) charging a raw material comprising a Russian dandelion-derived natural rubber and a vulcanization accelerator into the kneading machine and kneading it, and
   (2) kneading the kneaded product obtained in the substep (1) and sulfur.

It is considered that, by charging a vulcanization accelerator, which is normally charged by a final kneading, by a base kneading, as an order of charging materials, dispersibility of the vulcanization accelerator is improved and abrasion resistance is improved.

### <Definition>

An "average domain width D (nm)" is a value obtained by ternarizing an image obtained by an atomic force microscope (AFM), extracting a portion corresponding to a filler, and totaling lengths of the remaining polymer phase interfaces. If a filler is present in one polymer phase, the calculation is performed with an extracted portion being filled, and if the filler is located at an interface between two polymer components, the calculation is performed with the portion being extracted.

Here, ternarization means that, when pixels of an image obtained by the AFM are expressed with 256 gradations (8 bits), the pixels are identified as binary values of white pixels (255) and black pixels (0), as well as gray pixels (128).

A "thickness T, in mm, of a tread part" is a thickness in a direction perpendicular to a tread surface measured on a tire equator in a cross section when a tire is cut along a plane passing through a tire meridian line (tire meridian cross-section). When the tire has a circumferential groove on the tire equator, the thickness is a thickness recognized as having the groove filled. Besides, the thickness of the tread part is an average value of thicknesses of the tread part as calculated at five positions by rotating the tire by 72° in a circumferential direction.

A "land ratio" refers to a ratio of an actual ground-contacting area to a total ground-contacting area on a grounding surface of a tread part. A method of measuring the total ground-contacting area and the actual ground-contacting area will be described below.

A "standardized load" is a load in a standard system including a standard, on which the tire is based, defined for each tire by the standard, e.g., a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in a case of a tire that is not specified in the above-described standard, a standardized load WL is calculated by the following equations: $WL = 0.000011 \times V + 175 ,$ $V = \left\{{\left(Dt/2\right)}^{2}-{\left(Dt/2-Ht\right)}^{2}\right\} \times π \times Wt ,$ wherein V is a virtual volume, in mm³, of the tire, Dt is a tire outer diameter, in mm, Ht is a tire cross-sectional height, in mm, and Wt is a tire cross-sectional width, in mm. Besides, in the present specification, the "maximum load capacity" has the same meaning as the above-described standardized load.

### <Measuring method>

"G*a" is a complex elastic modulus, in MPa, measured using a rheometer ARES manufactured by TA Instruments under a condition of a temperature at 70°C, a frequency of 10 Hz, and a torsional shear of 0.25%. "G*b" is a complex elastic modulus, in MPa, measured under a condition of a temperature at 70°C, a frequency of 10 Hz, and a torsional shear of 1.0%. A sample for measuring the complex elastic modulus is a disk-shaped vulcanized rubber composition having a diameter of 10 mm and a thickness of 2.0 mm. When it is produced by being cut out from a tire, it is cut out from a tread part of the tire so that a tire radial direction becomes a thickness direction.

"70°C tan δ" is a loss tangent measured using a viscoelasticity measuring device, e.g., EPLEXOR series manufactured by gabo Systemtechnik GmbH, under a condition of a temperature at 70°C, a frequency of 10Hz, an initial strain of 5%, a dynamic strain of ±1%, and an extension mode. A sample for measuring the loss tangent is a vulcanized rubber composition of 20 mm in length × 4 mm in width × 1 mm in thickness. When it is produced by being cut out from a tire, it is cut out from a tread part of the tire so that a tire circumferential direction becomes a long side and a tire width direction becomes a thickness direction.

"30°C tan δ" is a loss tangent measured using a viscoelasticity measuring device, e.g., EPLEXOR series manufactured by gabo Systemtechnik GmbH, under a condition of a temperature at 30°C, a frequency of 10Hz, an initial strain of 5%, a dynamic strain of ±1%, and an extension mode. A sample for the measurement is produced in the same manner as in the case for 70°C tan δ.

A "weight-average molecular weight (Mw) of a Russian dandelion-derived natural rubber" is measured and analyzed by a field flow fractionation (FFF) system and a multi-angle light scattering detector (MALS) connected to the FFF for calculation. Each device and condition for the FFF-MALS are as follows.
FFF device: TF2000 manufactured by Postnova Analytics GmbH (measurement condition: using THF for a mobile phase and setting a flow rate of a filtrate at 0.3 L/min)
MALS detector: PN3150 manufactured by Postnova Analytics GmbH (measurement condition: measuring at a total of 21 angles from 7° to 168°)
RI detector: PN3621 manufactured by Postnova Analytics GmbH (measurement condition: detected temperature at 37°C)
Method of coupling piping of the devices: coupling the FFF device-MALS detector-RI detector in this order

A "ground-contacting shape of a tread part" can be obtained by mounting a tire on a standardized rim, applying a standardized internal pressure, and leaving it to stand at 25°C for 24 hours, followed by painting the tire tread surface with ink, applying a standardized load to press the tread part against a paper at a camber angle of 0°, and transferring it to the paper. The transfer is performed at five sites by rotating the tire in a circumferential direction by 72°. Therefore, the ground-contacting shape is obtained five times.

A "total ground-contacting area" shall be an average value of five sites of areas obtained by an outer contour in the ground-contacting shape of the tread part. An "actual ground-contacting area" shall be an average value of five sites of areas of ink portions in the ground-contacting shape of the tread part. That is, a land ratio is obtained by the following equation: 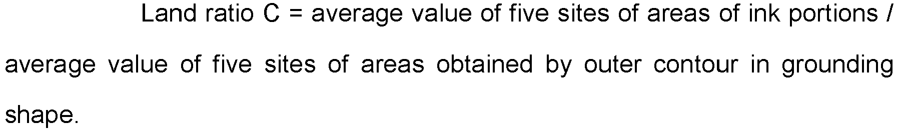 Land ratio C = average value of five sites of areas of ink portions / average value of five sites of areas obtained by outer contour in grounding shape.

A "N₂SA" is measured according to JIS K 6217-2:2017. The N₂SA is applied to carbon black, etc.

A "vinyl bond content (1,2-bond butadiene unit amount)" is measured by infrared absorption spectrometry. For example, it is applied to a butadiene rubber (BR), etc.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation). The weight-average molecular weight (Mw) is applied to rubber components other than a Russian dandelion-derived natural rubber, for example a SBR, a BR, etc.

A "cis 1,4 bond content (cis content)" is a value calculated by infrared absorption spectrometry. For example, it is applied to a BR, etc.

A "softening point" is a temperature at which a sphere drops when the softening point specified in JIS K 6220-1: 2001 is measured with a ring and ball softening point measuring device. For example, it is applied to a resin component, etc.

### <Tire>

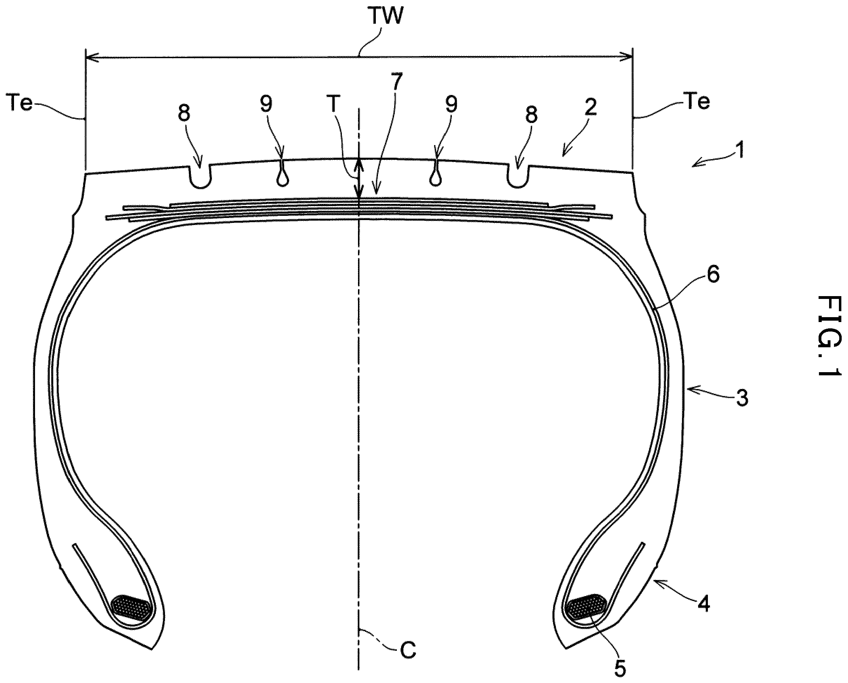

FIGS. 1 to 3 illustrate a tire that is one embodiment of the present invention, but the present invention is not limited thereto. FIGS. 1 to 3 show a part of a cross section along a tire meridian line. In FIGS. 1 to 3, a vertical direction is a tire radial direction, a horizontal direction is a tire axial direction, and a direction perpendicular to a paper surface is a tire circumferential direction.

FIG. 1 is a meridional cross-sectional view including a tire rotation axis (not shown) in a standardized state of a tire 1 of one embodiment of the present invention. The tire 1 comprises a tread part 2, a pair of sidewall parts 3, a pair of bead parts 4, a pair of bead cores 5, a carcass layer 6, and a belt layer 7. Four circumferential grooves 8, 9 are formed in the tread part 2. A distance in a tire axial direction from one tread end Te to the other tread end Te is a tread width TW.

A thickness T of the tread part 2 is preferably 15.0 mm or less, more preferably 10.0 mm or less, further preferably 9.0 mm or less, particularly preferably 8.8 mm or less, from the viewpoint of abrasion resistance. Moreover, the thickness T of the tread part is preferably 6.0 mm or more, more preferably 6.5 mm or more, further preferably 7.0 mm or more, from the viewpoint of fuel efficiency.

### [Circumferential groove]

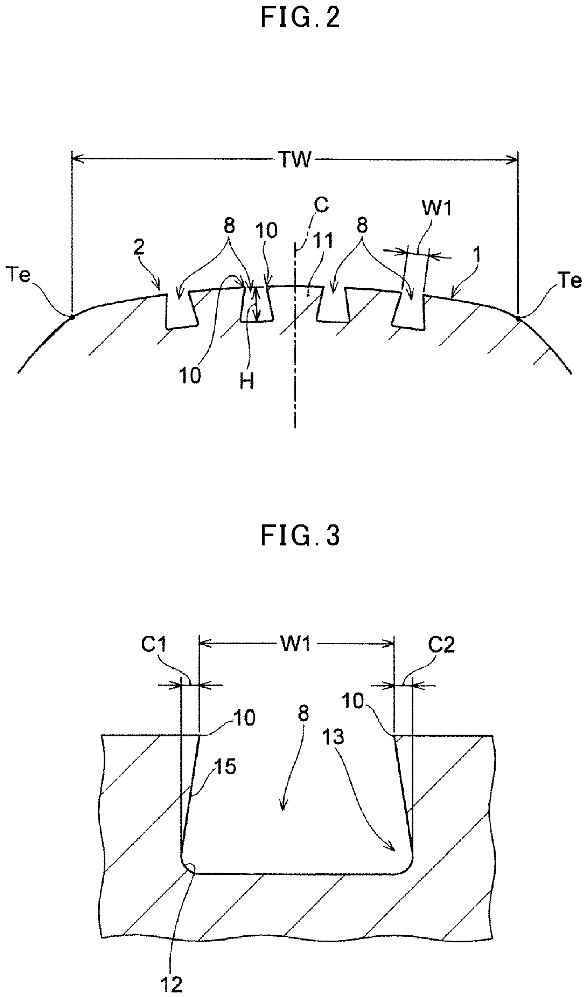

As shown in FIG. 2, the tread part 2 is provided with circumferential grooves 8 extending continuously in a tire circumferential direction. In FIG. 2, a total of four circumferential grooves 8 are provided between a tire equator C and each tread end Te, but the present invention is not limited to such an aspect. The tread part 2 has a land part 11 partitioned off by circumferential grooves 8 in a tire width direction.

A groove width W1 of each circumferential groove 8 can be, for example, 3.0% or more and 15.0% or less of the tread width TW when an opening width on the tread surface is 2.0 mm or more. Besides, in the present specification, a groove width of each circumferential groove 8 means a length between groove edges appearing on the tread surface of the tread part 2 in the tire meridian cross-section.

A groove depth H of the circumferential groove 3 is calculated by a distance between an extension line of a circumferential groove 8 from a groove edge 10 on an outermost surface of the tread and a groove bottom (deepest part 12) of the circumferential groove. Besides, the groove depth H is defined as a groove depth of a circumferential groove in which the distance between the extension line of the circumferential groove from the groove edge on the outermost surface of the tread and the groove bottom of the circumferential groove is the longest, for example, when there are a plurality of circumferential grooves 8.

The groove depth H of the circumferential groove is preferably greater than 1.0 mm, more preferably greater than 1.5 mm, further preferably 2.0 mm or more, from the viewpoint of the effects of the present invention. Moreover, the groove depth of the circumferential groove is preferably less than 5.0 mm, more preferably less than 4.5 mm, further preferably less than 3.5 mm, particularly preferably less than 3.0 mm, from the viewpoint of durability.

In FIG. 2, a groove wall of the circumferential groove 8 is provided with a recessed part recessed outward in a groove width direction with respect to the groove edge 10 on the outermost surface of the tread. The tread part 2 is preferably provided, on at least one groove wall of the circumferential groove 8, with a recessed part recessed outward in the groove width direction with respect to the groove edge appearing on the tread surface of the tread part 2. A groove depth H, in mm, of the deepest part of the circumferential groove provided with the recessed part is calculated in the same manner as the groove depth of the circumferential groove as well.

In FIG. 3 , the circumferential groove 8 is provided, on the groove walls on both sides, with a recessed part 13 having a constant recessed amount in the tire circumferential direction. The recessed part 13 has, for example, a flat surface 15 formed between the deepest part 12 and the groove edge 10, but is not limited to such an aspect.

A total recessed amount (c1+c2 in FIG. 3) of the circumferential groove 8 is preferably 0.10 to 5.00 times, more preferably 0.15 to 3.50 times, further preferably 0.20 to 2.00 times the groove width W1 of the circumferential groove 8. Besides, if there are a plurality of circumferential grooves each having the recessed part, it is sufficient that a total recessed amount of any of the circumferential grooves satisfies the above-described relationship, and that all grooves each having the recessed part satisfy the above-described relationship.

The circumferential groove provided with a recessed part recessed outward in the groove width direction with respect to the groove edge 10 appearing on the tread surface of the tread part 2 may be a circumferential groove obtained by combining a sipe and a hidden groove that communicates with the tread surface through the sipe (for example, a circumferential groove 9 in FIG. 1).

A land ratio C of the tire that is the first embodiment of the present invention is preferably greater than 0.60, more preferably greater than 0.65, further preferably greater than 0.70, from the viewpoint of abrasion resistance. When the land ratio is less than 0.60, deformation of the tread part becomes large, so that it is considered that an effect of improving abrasion resistance deteriorates. On the other hand, the land ratio C is preferably less than 0.90, more preferably less than 0.85, further preferably less than 0.80. When the land ratio C is greater than 0.90, the rubber in the tread part cannot be sufficiently deformed, and an effect of improving fuel efficiency tends to deteriorate.

### [Rubber composition]

The tire that is the first embodiment of the present invention has a tread part, the tread part being composed of a rubber composition that comprises a rubber component comprising a Russian dandelion-derived natural rubber and a butadiene rubber.

In the tire of the present invention, an average domain width D measured by ternarizing an image of the butadiene rubber as obtained by the AFM is 370 nm or less, and the average domain width D is preferably 360 nm or less, more preferably 350 nm or less, further preferably 340 nm or less, further preferably 330 nm or less, particularly preferably 320 nm or less. Moreover, a lower limit value of the average domain width D is not particularly limited, but can be, for example, 250 nm or more, 280 nm or more, 300 nm or more, or the like.

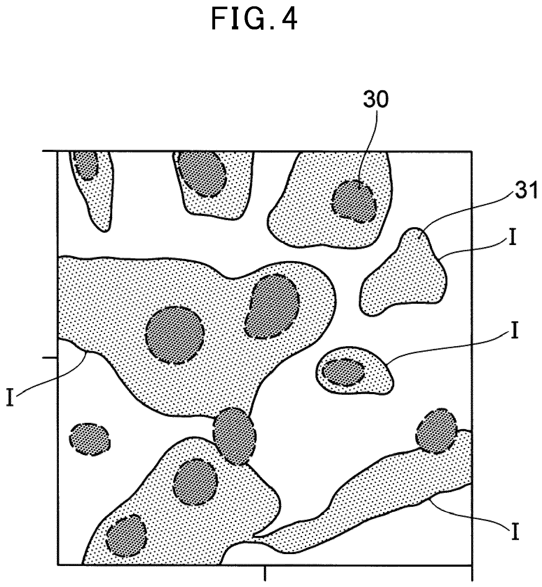

FIG. 4 is a conceptual diagram of an atomic force micrograph showing a distribution state of a filler. In FIG. 4, the average domain width D of the butadiene rubber is a value obtained by summing up lengths of interfaces I of portions 31 corresponding to butadiene rubber phases remained after extracting portions 30 corresponding to fillers.

The average domain width D measured by ternarizing an image of the butadiene rubber as obtained by the AFM can be adjusted by a type and a Mw of the butadiene rubber, types and Mws of rubber components other than the butadiene rubber, and the like.

The product (D×T) of D and the thickness T of the tread part is preferably 3000 or less, more preferably 2900 or less, further preferably 2750 or less, particularly preferably 2600 or less, from the viewpoint of dispersibility of a filler. Moreover, D×T is preferably 1000 or more, more preferably 1500 or more, further preferably 2000 or more, from the viewpoint of securing the thickness of the tread part to ensure fuel efficiency.

The complex elastic modulus G*a at 0.25% torsional shear at 70°C of the rubber composition is preferably 4.0 MPa or more, more preferably 4.5 MPa or more, further preferably 5.0 MPa or more, from the viewpoint of running stability. Moreover, G*a is preferably 11.0 MPa or less, more preferably 11.5 MPa or less, further preferably 12.0 MPa or less, from the viewpoint of breaking strength.

A complex elastic modulus G*b at 1.0% torsional shear at 70°C of the rubber composition is preferably 4.0 MPa or more, more preferably 4.5 MPa or more, further preferably 5.0 MPa or more, from the viewpoint of running stability. Moreover, G*b is preferably 11.0 MPa or less, more preferably 11.5 MPa or less, further preferably 12.0 MPa or less, from the viewpoint of breaking strength.

A complex elastic modulus G* at torsional shear can be adjusted depending on types and amounts of components to be compounded in the rubber composition, for example, it tends to become larger by increasing an amount of a filler or the like and tends to become smaller by reducing the amount of the filler or the like. G* is measured by the above-described method.

In the rubber composition, a difference (G*a-G*b) ΔG* between G*a and G*b is preferably 0.50 MPa or less, more preferably 0.45 MPa or less, further preferably 0.40 MPa or less, from the viewpoints of improving dispersibility of a filler such as carbon black and the like and of improving abrasion resistance. Besides, a lower limit value of ΔG* is not particularly limited.

The product (T×ΔG*) of the thickness T of the tread part and ΔG* is preferably 5.0 or less, more preferably 4.5 or less, further preferably 4.0 or less, particularly preferably 3.5 or less, from the viewpoint of the effects of the present invention. Besides, a lower limit value of T×ΔG* is not particularly limited.

The tan δ at 70°C (70°C tan δ) of the rubber composition is preferably 0.17 or less, more preferably 0.15 or less, further preferably 0.13 or less, particularly preferably 0.11 or less, from the viewpoint of fuel efficiency. Moreover, the tan δ at 70°C is preferably 0.02 or more, more preferably 0.03 or more, further preferably 0.04 or more, from the viewpoint of durability.

The product (T×70°C tan δ) of the thickness T of the tread part and 70°C tan δ is preferably 2.25 or less, more preferably 2.20 or less, further preferably 2.15 or less, particularly preferably 2.10 or less, from the viewpoint of the effects of the present invention. Besides, a lower limit value of T×70°C tan δ is not particularly limited. 70°C tan δ can be adjusted depending on types and amounts of components to be compounded in the rubber composition, for example, it tends to become larger by increasing an amount of a filler or oil.

The tan δ at 30°C (30°C tan δ) of the rubber composition is preferably 0.3 or less, more preferably 0.29 or less, further preferably 0.28 or less, particularly preferably 0.27 or less, from the viewpoint of fuel efficiency. Moreover, 30°C tan δ is preferably 0.10 or more, more preferably 0.11 or more, further preferably 0.12 or more, from the viewpoint of durability. 30°C tan δ can be adjusted depending on types and amounts of components to be compounded in the rubber composition, for example, it tends to become larger by increasing an amount of a filler or oil.

### <Rubber component>

The rubber composition comprises a Russian dandelion-derived natural rubber and a butadiene rubber as rubber components, and can also be a rubber component consisting of a Russian dandelion-derived natural rubber and a butadiene rubber, and further can be a rubber component comprising rubber components other than a Russian dandelion-derived natural rubber and a butadiene rubber. Hereinafter, a natural rubber may be referred to as a NR.

### (Russian dandelion-derived NR)

The rubber composition comprises a Russian dandelion-derived NR as a rubber component. By using a Russian dandelion-derived NR, a supply risk of a natural rubber can be dispersed. The Russian dandelion-derived NR has characteristics of containing a larger amount of a high molecular weight component, having a lower degree of branching, and containing a larger amount of a linear polymer, compared with a rubber tree (Hevea)-derived natural rubber. Since it contains a larger amount of a linear polymer, there are fewer molecular terminals of the polymer and fewer free molecular terminals, so that it has characteristic of comprising fewer components that cause hysteresis loss.

The Russian dandelion-derived NR can be obtained, for example, by the extraction methods described in US Patent Application Publication No. 2019/0048101 A and US Patent Application Publication No. 2019/0046895 A.

A weight-average molecular weight Mw of the Russian dandelion-derived NR is calculated with measurement and analysis by FFF-MALS according to the above-described measuring method. The Mw of the Russian dandelion-derived NR as measured by FFF-MALS is preferably 4,000,000 or more, more preferably 4,500,000 million or more, further preferably 5,000,000 or more, further preferably 5,100,000 or more, particularly preferably 5,200,000 or more. Moreover, the Mw of the Russian dandelion-derived NR as measured by FFF-MALS is, but not particularly limited to, usually 4,000,000 or less.

A content A of the Russian dandelion-derived NR in the rubber component is preferably 10% by mass or more, more preferably 20% by mass or more, further preferably 30% by mass or more, particularly preferably 40% by mass or more, from the viewpoint of the effects of the present invention. Moreover, the content A is preferably 80% by mass or less, more preferably 75% by mass or less, further preferably 70% by mass or less, particularly preferably 60% by mass or less, from the viewpoint of comprising other rubber components such as a butadiene rubber and the like to improve abrasion resistance and fuel efficiency.

A product (A×C) of the content A of the Russian dandelion-derived NR in the rubber component and the land ratio C of the tire is preferably 81 or less, more preferably 70 or less, further preferably 60 or less, from the viewpoint of abrasion resistance. Moreover, a lower limit value of A×C is not particularly limited, but can be, for example, 20 or more, 25 or more, 30 or more, or the like.

### (BR)

The rubber composition comprises a butadiene rubber (BR). The BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), a modified BR (a high cis modified BR, a low cis modified BR), and the like. These BRs may be used alone, or two or more thereof may be used in combination.

As the high cis BR, for example, those commercially available from Zeon Corporation, Ube Industries, Ltd., JSR Corporation, etc. can be used. When the high cis BR is compounded, low temperature characteristics and abrasion resistance can be improved. The cis content is preferably 95 mol% or more, more preferably 96 mol% or more, further preferably 97 mol% or more. Besides, the cis content of the BR is measured by the above-described measuring method.

As a modified BR, a modified butadiene rubber (a modified BR) modified at its terminal and/or main chain with a functional group comprising at least one element selected from a group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (a tin-modified BR), and the like. Moreover, the modified BR may be either non-hydrogenated or hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR is measured by the above-described measuring method.

A content of the BR in the rubber component is preferably 20% by mass or more, more preferably 25% by mass or more, further preferably 30% by mass or more, particularly preferably 40% by mass or more, from the viewpoint of the effects of the present invention. Moreover, the content is preferably 80% by mass or less, more preferably 75% by mass or less, further preferably 70% by mass or less, particularly preferably 60% by mass or less, from the viewpoint of comprising other rubber components to improve abrasion resistance and fuel efficiency.

### (Other rubber components)

The rubber component relating to the present embodiment may comprise rubber components other than the above-described Russian dandelion-derived natural rubber and BR. As other rubber components, a cross-linkable rubber component commonly used in the tire industry can be used, examples of which include isoprene-based rubbers such as an isoprene-based rubber, a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like; diene-based rubbers other than a SBR and a BR; non-diene-based rubbers such as a butyl rubber (IIR), a halogenated butyl rubber, an ethylene propylene rubber, a polynorbornene rubber, a silicone rubber, a polyethylene chloride rubber, a fluororubber (FKM), an acryl rubber (ACM), a hydrin rubber, and the like. These other rubber components may be used alone, or two or more thereof may be used in combination.

### (Isoprene-based rubber)

Examples of the isoprene-based rubber include NRs other than a Russian dandelion-derived NR, an isoprene rubber (IR), a reformed NR, a modified NR, modified IR, and the like. As NRs other than a Russian dandelion-derived NR, those common in the tire industry such as, for example, SIR20, RSS#3, TSR20, and the like can be used. The IR is not particularly limited, and those common in the tire industry such as, for example, IR 2200 and the like can be used. Examples of the reformed NR include a deproteinized natural rubber (DPNR), an ultra pure natural rubber, and the like, examples of the modified NR include an epoxidized natural rubber (ENR), a hydrogenated natural rubber (HNR), a grafted natural rubber, and the like, and examples of the modified IR include an epoxidized isoprene rubber, a hydrogenated isoprene rubber, a grafted isoprene rubber, and the like. These isoprene-based rubbers may be used alone, or two or more thereof may be used in combination.

### (SBR)

The SBR is not particularly limited, examples of which include unmodified solution-polymerized SBR (S-SBR) and emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used. These SBRs may be used alone, or two or more thereof may be used in combination.

### <Filler>

The rubber composition preferably comprises carbon black as a filler and may be a filler consisting of carbon black.

### (Carbon black)

Carbon black is not particularly limited, and, for example, those commonly used in the tire industry such as GPF, FEF, HAF, ISAF, SAF, and the like can be used. Besides, in addition to carbon black produced by burning general mineral oil, carbon black using biomass materials such as lignin and the like may be used. These carbon black may be used alone, or two or more thereof may be used in combination.

A nitrogen adsorption specific surface area (N₂SA) of carbon black is preferably 50 m²/g or more, more preferably 70 m²/g or more, further preferably 100 m²/g or more, particularly preferably 120 m²/g or more, from the viewpoints of reinforcing property and grip performance. Moreover, it is preferably 250 m²/g or less, more preferably 220 m²/g or less, from the viewpoint of dispersibility. Besides, the N₂SA of carbon black is measured by the above-described measuring method.

A content of carbon black based on 100 parts by mass of the rubber component is preferably 20 parts by mass or more, more preferably 30 parts by mass or more, further preferably 40 parts by mass or more, particularly preferably 50 parts by mass or more, from the viewpoint of improving abrasion resistance and heat generation. Moreover, it is preferably 90 parts by mass or less, more preferably 80 parts by mass or less, further preferably 70 parts by mass or less, particularly preferably 65 parts by mass or less, from the viewpoint of fuel efficiency.

### (Other fillers)

As fillers other than carbon black, those commonly used in the tire industry can be compounded, such as silica, aluminum hydroxide, calcium carbonate, alumina, clay, talc, and the like. In addition to these fillers, a biochar (BIOCHAR) may be appropriately used.

### (Silica)

Silica is not particularly limited, and those common in the tire industry can be used, such as, for example, silica prepared by a dry process (anhydrous silica), silica prepared by a wet process (hydrous silica), and the like. Among them, hydrous silica prepared by a wet process is preferable from the reason that it has many silanol groups. Besides, in addition to the above-described silica, silica made of a biomass material such as rice husks may be appropriately used. These silica may be used alone, or two or more thereof may be used in combination.

The rubber composition can appropriately comprise compounding agents conventionally and generally used in the tire industry, for example, a plasticizing agent, wax, processing aid, stearic acid, zinc oxide, an antioxidant, a vulcanizing agent, a vulcanization accelerator, and the like, in addition to the above-described components.

### <Plasticizing agent>

The rubber composition preferably comprises a plasticizing agent. Examples of the plasticizing agent include, for example, oil, a resin component, a liquid rubber, an ester-based plasticizing agent, and the like.

Examples of oil include, for example, a process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic compound (PCA) can also be used. Examples of the process oil having a low content of a PCA include a mild extraction solution (MES), a treated distillate aromatic extract (TDAE), a heavy naphthenic oil, and the like. Moreover, from the viewpoint of life cycle assessment, those obtained by purifying a waste oil after being used in a rubber mixer or an engine, or a waste cooking oil used in a restaurant may be used.

A content of oil when compounded based on 100 parts by mass of the rubber component is preferably 2.0 parts by mass or more, more preferably 3.0 parts by mass or more, further preferably 5.0 parts by mass or more, from the viewpoint of dispersibility of carbon black. Moreover, it is preferably 40 parts by mass or less, more preferably 30 parts by mass or less, further preferably 20 parts by mass or less, particularly preferably 10 parts by mass or less, from the viewpoint of abrasion resistance.

The resin component is not particularly limited, examples of which include a petroleum resin, a terpene-based resin, a rosin-based resin, a phenol-based resin, and the like, which are commonly used in the tire industry. These resin components may be used alone, or two or more thereof may be used in combination.

In the present specification, the "C5-based petroleum resin" refers to a resin obtained by polymerizing a C5 fraction. Examples of the C5 fraction include, for example, a petroleum fraction having 4 to 5 carbon atoms such as cyclopentadiene, a pentene, a pentadiene, isoprene, and the like. As the C5-based petroleum resin, a dicyclopentadiene resin (DCPD resin) is appropriately used.

In the present specification, an "aromatic petroleum resin" refers to a resin obtained by polymerizing C9 fractions, and may be one obtained by hydrogenating or modifying them. Examples of the C9 fraction include, for example, a petroleum fraction having 8 to 10 carbon atoms such as vinyltoluene, an alkylstyrene, indene, a methyl indene, and the like. As specific examples of the aromatic petroleum resin, for example, a coumarone indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As the aromatic vinyl-based resin, for example, those commercially available from Kraton Corporation, Eastman Chemical Company, etc. can be used.

In the present specification, the "C5-C9-based petroleum resin" refers to a resin obtained by copolymerizing the C5 fraction and the C9 fraction, and may be one obtained by hydrogenating or modifying them. Examples of the C5 fraction and the C9 fraction include the above-described petroleum fractions. As the C5-C9-based petroleum resin, for example, those commercially available from Tosoh Corporation, Zibo Luhua Hongjin New Material Group Co., Ltd, etc. can be appropriately used.

Examples of the terpene-based resin include a polyterpene resin consisting of at least one selected from terpene compounds such as α-pinene, β-pinene, limonene, a dipentene, and the like; an aromatic-modified terpene resin made from a terpene compound and an aromatic compound; a terpene phenolic resin made from a terpene compound and a phenol-based compound; and those in which these terpene-based resins are hydrogenated (hydrogenated terpene-based resins). Examples of the aromatic compound used as a raw material for the aromatic-modified terpene resin include, for example, styrene, α-methylstyrene, vinyltoluene, a divinyltoluene, and the like. Examples of the phenol-based compound used as a raw material for the terpene phenolic resin include, for example, phenol, bisphenol A, cresol, xylenol, and the like.

The rosin-based resin is not particularly limited, examples of which include, for example, natural resin rosins such as tall rosin, gum rosin, and wood rosin, rosin-modified resins obtained by modifying them by hydrogenation, disproportionation, dimerization, esterification, or the like, and the like.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A softening point of the resin component is preferably 60°C or higher, more preferably 65°C or higher, further preferably 70°C or higher, from the viewpoint of wet grip performance. Moreover, it is preferably 150°C or lower, more preferably 140°C or lower, further preferably 130°C or lower, from the viewpoints of processability and improvement in dispersibility of a rubber component with a filler. Besides, the softening point is measured by the above-described method.

The liquid polymer is not particularly limited as long as it is a polymer in a liquid state at normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like, and it may be one obtained by hydrogenating them, and may be a modified liquid polymer in which a main chain and/or a terminal thereof is modified with a modifying group (preferably a terminal-modified liquid polymer). These liquid polymers may be used alone, or two or more thereof may be used in combination.

Examples of the modified liquid polymer include, but not particularly limited to, for example, a liquid butadiene polymer modified at one or both ends thereof (terminal-modified liquid BR), a liquid styrene-butadiene polymer modified at one or both ends thereof (terminal-modified liquid SBR), and the like, and it may be one obtained by hydrogenating them. Among them, a terminal-modified liquid BR which may be hydrogenated is preferable.

Examples of the ester-based plasticizing agent include, for example, dibutyl adipate (DBA), diisobutyl adipate (DIBA), dioctyl adipate (DOA), bis(2-ethylhexyl)azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

### (Other compounding agents)

A content of stearic acid when compounded based on 100 parts by mass of the rubber component is preferably 0.5 parts by mass or more, more preferably 1.0 parts by mass or more, from the viewpoint of processability. Moreover, it is preferably 10.0 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 parts by mass or more, from the viewpoint of processability. Moreover, it is preferably 10.0 parts by mass or less, more preferably 5.0 parts by mass or less, from the viewpoint of abrasion resistance.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of preventing whitening of a tire due to bloom.

Examples of the antioxidant include, but not particularly limited to, for example, amine-based, quinoline-based, quinone-based, phenol-based and imidazole-based compounds, and a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like, and quinoline-based antioxidants such as 2,2,4-trimethyl-1,2-dihydroquinoline polymer, 6-ethoxy-2,2,4-trimethyl-1,2-dihydroquinoline, and the like. These antioxidants may be used alone, or two or more thereof may be used in combination.

A content of the antioxidant when compounded based on 100 parts by mass of the rubber component (a total content of antioxidants when two or more antioxidants are used in combination) is preferably 1.0 parts by mass or more, more preferably 1.5 parts by mass or more, further preferably 2.0 parts by mass or more, from the viewpoint of ozone crack resistance of the rubber. Moreover, it is preferably 10.0 parts by mass or less, more preferably 8.0 parts by mass or less, further preferably 6.0 parts by mass or less, from the viewpoints of abrasion resistance and wet grip performance.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide. Among them, a fatty acid amide is preferable. They may be used alone, or two or more thereof may be used in combination.

A content of processing aid when compounded based on 100 parts by mass of the rubber component is preferably 0.5 parts by mass or more, more preferably 1.0 parts by mass or more, further preferably 1.5 parts by mass or more, from the viewpoint of exhibiting an effect of improving processability. Moreover, it is preferably 10.0 parts by mass or less, more preferably 8.0 parts by mass or less, further preferably 6.0 parts by mass or less, from the viewpoints of abrasion resistance and breaking strength.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, one or more vulcanization accelerators selected from a group consisting of sulfenamide-based, guanidine-based, and thiazole-based vulcanization accelerators are preferable, and it is more preferable that a sulfenamide-based vulcanization accelerator and a guanidine-based vulcanization accelerator are used in combination.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably 1.0 parts by mass or more, more preferably 2.0 parts by mass or more, further preferably 3.0 parts by mass or more. Moreover, the content of the vulcanization accelerator based on 100 parts by mass of the rubber component is preferably 8.0 parts by mass or less, more preferably 7.0 parts by mass or less, further preferably 6.0 parts by mass or less. When the content of the vulcanization accelerator is within the above-described ranges, breaking strength and elongation tend to be secured.

### <Production>

The tire relating to the present invention can be manufactured by a usual method using the above-described rubber composition. That is, the tire can be produced by extruding an unvulcanized rubber composition, obtained by compounding each of the above-described components based on the rubber component as necessary, into a shape of a tread with an extruder equipped with a mouthpiece having a predetermined shape, attaching it together with other tire members on a tire forming machine, and molding them by a usual method to form an unvulcanized tire, followed by heating and pressurizing this unvulcanized tire in a vulcanizing machine.

The rubber composition of the tire relating to the first embodiment of the present invention can be produced by a known method.

### <Application>

The tire relating to the present invention can be used not only as a heavy-duty pneumatic tire but also as a pneumatic tire for a passenger car or an automated motorcycle, for example. Moreover, the tire relating to the present invention is not limited to a pneumatic tire, and may be applied to, for example, an airless tire. Among them, it is preferably used as a heavy-duty pneumatic tire from the viewpoint of the effects of the present invention. Besides, a heavy-duty tire refers to a tire with a maximum load capacity of 1400 kg or more.

### [Method of producing rubber composition]

A method of producing a rubber composition relating to the second embodiment of the present invention is a method of producing a rubber composition comprising a rubber component that comprises a Russian dandelion-derived natural rubber and a butadiene rubber, wherein an average domain width **D,** which is measured by ternarizing an image of the butadiene rubber obtained using an atomic force microscope (AFM), is 370 nm or less, and wherein the method comprises the step of kneading a rubber component and an additive in a kneading machine equipped with a rotor, the step comprising the substeps of:
(1) charging a raw material comprising a Russian dandelion-derived natural rubber and a vulcanization accelerator into the kneading machine and kneading it, and
(2) kneading the kneaded product obtained in the substep (1) and sulfur.

### <Kneading step>

The method of producing a rubber composition comprises the step (1) and the step (2), in which the step (1) is also referred to as a base kneading step, and the step (2) is also referred to as a final kneading step of adding a vulcanizing agent to the kneaded product obtained in the base kneading step and further kneading the mixture.

### <Kneading machine>

As a kneading machine, it is preferable to use a known closed type kneading machine that has been conventionally used in the tire industry. Such a closed type kneading machine is generally provided with a ram weight that can be raised and lowered above a kneading chamber in which a rotor is installed. The rotor is provided with shafts at both ends or one end thereof, which are rotatably supported by bearings, and rotation of the shafts causes the rotor to rotate. Generally, two rotors are installed in a kneading chamber as a pair. Then, kneading is performed by rotating the rotor in the kneading chamber while pushing raw materials such as rubber components and the like into the kneading chamber by lowering the ram weight. Examples of such a kneading machine include, for example, a Banbury mixer, a kneader, and the like. Among them, the Banbury mixer is preferable because of its excellent workability and productivity. A shape of the rotor may be either tangential or meshing. Moreover, the rotor may be a two-blade rotor, a four-blade rotor, or a six-blade rotor. A capacity of the closed type kneading machine is not particularly limited, and, for example, various capacities in a range of 1.7 to 619 L can be used.

### (Base kneading step)

The base kneading step can be a step of kneading sulfur-free raw materials using the above-described closed kneading machine.

The kneading machine used in the base kneading step is not particularly limited as long as it can adjust a discharge temperature.

The discharge temperature in the base kneading step is preferably 80°C or higher, more preferably 90°C or higher, further preferably 100°C or higher, from the viewpoint of dispersibility of carbon black. Moreover, it is preferably 130°C or lower, more preferably 120°C or lower, further preferably 110°C or lower, from the viewpoint of suppressing rubber shrinkage due to heat.

A kneading time in the base kneading step is, but not particularly limited to, preferably 50 seconds or more, more preferably 70 seconds or more, further preferably 90 seconds or more, from the viewpoint of dispersibility of carbon black. Moreover, it is preferably 180 seconds or less, more preferably 150 seconds or less, from the viewpoint of suppressing shrinkage.

The number of rotations of the rotor in the base kneading step is not particularly limited, and may be set to a number of rotations conventionally used in the tire industry.

Raw materials in the base kneading step preferably comprise a Russian dandelion-derived natural rubber, a butadiene rubber, and a vulcanization accelerator, as well as a filler, a plasticizing agent, and other compounding agents. An amount of the filler, the plasticizing agent, and other compounding agents added in the base kneading step is preferably 100% by mass of a total content in the rubber composition from the viewpoint of dispersibility.

### (Final kneading step)

The final kneading step can be a step of kneading the kneaded product obtained in the base kneading step and sulfur.

The kneading machine used in the final kneading step is not particularly limited as long as it can adjust a discharge temperature, and may be a closed type kneading machine or an open roll.

A discharge temperature in the final kneading step is, but not particularly limited to, preferably 70°C or higher, more preferably 80°C or higher, further preferably 85°C or higher, from the viewpoint of dispersibility of each component. Moreover, it is preferably 120°C or lower, more preferably 110°C or lower, further preferably 105°C or lower, from the viewpoint of suppressing excessive vulcanization reaction.

A kneading time in the final kneading step is not particularly limited, but can be, for example, 1 to 10 minutes.

The number of rotations of the rotor in the final kneading step is not particularly limited, and may be set to a number of rotations conventionally used in the tire industry.

An amount of sulfur added in the final kneading step is preferably greater than 50% by mass, more preferably greater than 75% by mass, further preferably greater than 90% by mass, particularly preferably 100% by mass of a total content of rubber components in the rubber composition.

An amount of rubber components other than sulfur added in the final kneading step is preferably less than 50% by mass, more preferably less than 25% by mass, further preferably less than 10% by mass, particularly preferably less than 0% by mass of the total content of rubber components in the rubber composition.

The method of producing the rubber composition relating to the second embodiment of the present invention can be a conventional producing method except for including the above-described kneading steps.

### EXAMPLE

Results are shown in Tables 1 to 2, which are calculated based on various analysis and evaluation methods described below, reviewing a tire comprising a tread part produced using a rubber composition obtained by changing compounding according to Tables 1 to 2 using various chemicals shown below.
Russian dandelion-derived natural rubber 1: Russian dandelion-derived natural rubber produced in Production example which will be mentioned below (Mw: 5,860,000)
Russian dandelion-derived natural rubber 2: Russian dandelion-derived natural rubber produced in Production example which will be mentioned below (Mw: 5,110,000)
BR1: Ubepol BR (Registered Trademark) 150B manufactured by Ube Industries, Ltd. (unmodified BR, cis content: 97 mol%, Mw: 440,000)
BR2: BR730 manufactured by JSR Corporation (BR synthesized using a Nd-based catalyst, cis content: 95 mol%, Mw: 600,000)
Carbon black: Show Black N220 manufactured by Cabot Japan K.K. (N₂SA: 111 m²/g)
Oil: Diana Process NH-70S manufactured by Idemitsu Kosan Co., Ltd.
Stearic acid: Bead stearic acid "CAMELLIA" manufactured by NOF CORPORATION
Zinc oxide: Zinc oxide No. 2 manufactured by Mitsui Mining & Smelting Co., Ltd.
Wax: SUNNOC N manufactured by Ouchi Shinko Chemical Industry Co., Ltd.
Antioxidant 1: Nocrac 6C manufactured by Ouchi Shinko Chemical Industry Co., Ltd. (N-(1,3-dimethylbutyl)-N'-phenyl-p-phenylenediamine)
Antioxidant 2: ANTAGE RD manufactured by Kawaguchi Chemical Industry Co., LTD. (2,2,4-trimethyl-1,2-dihydroquinoline polymer)
Sulfur: Powdered sulfur manufactured by Karuizawa Sulfur Co, Ltd. Vulcanization accelerator: Nocceler NS manufactured by Ouchi Shinko Chemical Industry Co., Ltd. (N-t-butyl-2-benzothiazolesulfenamide)

### Production example: Synthesis of Russian dandelion-derived natural rubber

A Russian dandelion-derived natural rubber is prepared by an extraction method as described in US 2019/0048101 A and US 2019/0046895 A. The prepared natural rubber is added into THF so that the rubber concentration in the solution becomes 0.2% by mass, and the mixture is shaken for one week. The resulting solution is filtered using a PTFE filter (pore size: 1.0 or 5.0 µm). The filtrate is measured and analyzed by FFF-MALS to calculate a Mw of the rubber component. Based on the calculated Mw, a Russian dandelion-derived natural rubber 1 is distinguished from a Russian dandelion-derived natural rubber 2. Besides, each device and condition for FFF-MALS are as follows.
FFF device: TF2000 manufactured by Postnova Analytics GmbH (measurement condition: using THF for a mobile phase and setting a flow rate of a filtrate at 0.3 L/min)
MALS detector: PN3150 manufactured by Postnova Analytics GmbH (measurement condition: measuring at a total of 21 angles from 7° to 168°)
RI detector: PN3621 manufactured by Postnova Analytics GmbH (measurement condition: detected temperature at 37°C)
Method of coupling piping of the devices: coupling the FFF device-MALS detector-RI detector in this order

According to the compounding formulations shown in Tables 1 and 2, using a 1.7 L closed Banbury mixer, all chemicals other than sulfur and vulcanization accelerators are kneaded until a temperature reached a discharge temperature at 150°C to 160°C for 1 to 10 minutes to obtain a kneaded product. Next, using a twin-screw open roll, sulfur and vulcanization accelerators are added to the obtained kneaded product, and the mixture is kneaded for 4 minutes until the temperature reaches 105°C to obtain an unvulcanized rubber composition. The obtained unvulcanized rubber composition is molded into a shape of a tread part and attached together with other tire members, preparing an unvulcanized tire, followed by vulcanized at 170°C to obtain each test tire.

### <Measurement of average domain width D of BR>

A value obtained by ternarizing an image obtained by AFM, followed by extracting a portion corresponding to a filler, and totaling lengths of the remaining polymer phase interfaces is defined as a domain width D (nm). If a filler is present in one polymer phase, the calculation is performed with an extracted portion being filled, and if the filler is located at an interface between two polymer components, the calculation is performed with the portion being extracted.

### <Measurement of tan δ at 70°C>

A test piece is cut out from a tread part of each test tire, and a loss tangent (tan δ) is measured at a temperature of 70°C, a frequency of 10Hz, an initial strain of 5%, and a dynamic strain of ±1%, using EPLEXOR series manufactured by gabo Systemtechnik GmbH.

### <Carbon dispersion index>

A disk-shaped test piece with a diameter of 10 mm and a thickness of 2.0 mm is cut out from a tread part of each test tire so that the radial direction of the tire becomes a thickness direction, and a complex elastic modulus (at 0.25% shear deformation) G*a and a complex elastic modulus G*b (at 1.0% shear deformation) at torsional shear are measured under a condition of a temperature at 70°C and a frequency of 10 Hz. An inverse value of a difference ΔG* (G*a-G*b) between G*a and G*b is indicated as an index with Comparative example 2 being as 100. The results show that the larger the index is, the more excellent the carbon dispersibility is. 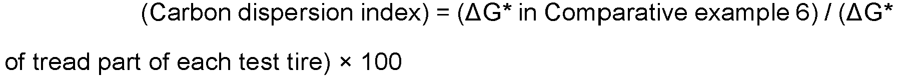 (Carbon dispersion index) = (ΔG* in Comparative example 6) / (ΔG* of tread part of each test tire) × 100

### <Fuel efficiency index>

For each vulcanized rubber test piece produced by being cut out with 20 mm in length × 4 mm in width × 1 mm in thickness from a tread part of each test tire so that the tire circumferential direction becomes a long side and the tire radial direction becomes a thickness direction, using a dynamic viscoelasticity measuring device (EPLEXOR series manufactured by gabo Systemtechnik GmbH), a complex elastic modulus E* and a loss tangent tan δ are measured under a condition of a temperature at 30°C, a frequency of 10 Hz, an initial strain of 5%, a dynamic strain of 1%, and an extension mode. An inverse value of 30°C tan δ of each tire is indicated as an index with Comparative example 2 being as 100 (Fuel efficiency index). The results show that the larger the index is, the more excellent the fuel efficiency is. 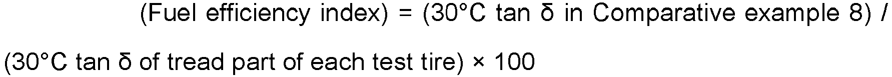 (Fuel efficiency index) = (30°C tan δ in Comparative example 8) / (30°C tan δ of tread part of each test tire) × 100

### <Abrasion resistance index>

A test piece with 20 mm in length × 4 mm in width × 1 mm in thickness is cut from a tread part of each test tire so that the tire circumferential direction becomes a long side, and a volume loss of each test piece is measured under a condition of a load of 100N, a speed of 20 km/h, and a slip angle of 6°, and indicated as an index based on the following equation. The results show that the larger the index is, the more excellent the abrasion resistance is. 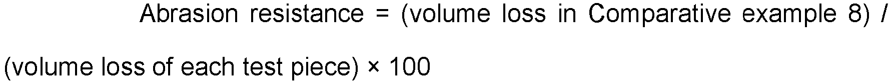 Abrasion resistance = (volume loss in Comparative example 8) / (volume loss of each test piece) × 100

### <Overall performance>

For each test tire, a sum of respective indexes of fuel efficiency and abrasion resistance is defined as an overall performance index, which is used for evaluation of each test tire.

Next, calculation is performed based on an evaluation method which will be described below, reviewing a tire comprising a tread part produced using a rubber composition obtained by changing compounding in accordance with Table 3 using various chemicals mentioned above.

According to the compounding formulations shown in the base kneading step in Table 3, using a 1.7 L closed Banbury mixer, the chemicals are kneaded until a temperature reaches a discharge temperature at 150°C to 160°C for 1 to 10 minutes to obtain a kneaded product. Next, using a twin-screw open roll, the components shown in the final kneading step in Table 3 are added to the kneaded product obtained in the base kneading step and kneaded for 4 minutes until the temperature reaches 105 °C to obtain an unvulcanized rubber composition. The obtained unvulcanized rubber composition is molded into a shape of a tread part and attached together with other tire members, preparing an unvulcanized tire, followed by vulcanized at 170°C to obtain each test tire.

### <Abrasion resistance index>

A test piece with 20 mm in length × 4 mm in width × 1 mm in thickness is cut from a tread part of each test tire so that the tire circumferential direction becomes a long side, and a volume loss of each test piece is measured under a condition of a load of 100N, a speed of 20 km/h, and a slip angle of 6°, and indicated as an index based on the following equation. The results show that the larger the index is, the more excellent the abrasion resistance is. 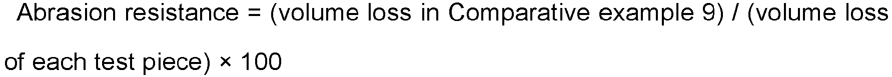 Abrasion resistance = (volume loss in Comparative example 9) / (volume loss of each test piece) × 100

**Table 1**

| | Example | | | | | | |
|---|---|---|---|---|---|---|---|
| | 1 | 2 | 3 | 4 | 5 | 6 | 7 |
| Compounding amount (part by mass) | | | | | | | |
| Russian dandelion-derived natural rubber 1 | - | - | - | - | - | - | - |
| Russian dandelion-derived natural rubber 2 | 70 | 50 | 30 | 50 | 50 | 50 | 50 |
| BR1 | - | - | - | - | - | - | - |
| BR2 | 30 | 50 | 70 | 50 | 50 | 50 | 50 |
| Carbon black | 60 | 60 | 60 | 40 | 60 | 60 | 60 |
| Oil | 5.0 | 5.0 | 5.0 | 5.0 | 5.0 | 5.0 | 5.0 |
| Stearic acid | 2.0 | 2.0 | 2.0 | 2.0 | 2.0 | 2.0 | 2.0 |
| Zinc oxide | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 |
| Antioxidant 1 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 |
| Sulfur | 1.0 | 1.0 | 1.0 | 1.0 | 1.0 | 1.0 | 1.0 |
| Vulcanization accelerator | 1.5 | 1.5 | 1.5 | 1.5 | 1.5 | 1.5 | 1.5 |
| D (nm) | 340 | 320 | 300 | 320 | 320 | 320 | 320 |
| T (mm) | 8.0 | 8.0 | 8.0 | 8.0 | 10.0 | 8.0 | 8.0 |
| T×D | 2720 | 2560 | 2400 | 2560 | 3200 | 2560 | 2560 |
| Content A of Russian dandelion-derived natural rubber (% by mass) | 70 | 50 | 30 | 50 | 50 | 50 | 50 |
| ΔG* (MPa) | 0.255 | 0.240 | 0.225 | 0.250 | 0.240 | 0.240 | 0.240 |
| ΔG*×T | 2.04 | 1.92 | 1.80 | 2.00 | 2.40 | 1.92 | 1.92 |
| 70°C tan δ | 0.12 | 0.11 | 0.10 | 0.10 | 0.11 | 0.11 | 0.11 |
| 70°C tan δ×T | 0.96 | 0.88 | 0.80 | 0.80 | 1.10 | 0.88 | 0.88 |
| (continued on the next page) | | | | | | | |
| 30°C tan δ | 0.20 | 0.19 | 0.18 | 0.18 | 0.19 | 0.19 | 0.19 |
| Groove depth of deepest part of circumferential groove (mm) | 2.0 | 2.0 | 2.0 | 2.0 | 2.0 | 2.0 | 2.0 |
| Groove with recessed part | Absence | Absence | Absence | Absence | Absence | Absence | Presence |
| Land ratio C | 0.75 | 0.75 | 0.75 | 0.75 | 0.75 | 0.75 | 0.75 |
| A×C | 52.5 | 37.5 | 22.5 | 37.5 | 37.5 | 37.5 | 37.5 |

| Index | | | | | | | |
|---|---|---|---|---|---|---|---|
| Carbon dispersity | 106 | 113 | 117 | 108 | 113 | 113 | 113 |
| Fuel efficiency | 100 | 102 | 104 | 104 | 102 | 102 | 102 |
| Abrasion resistance | 103 | 108 | 110 | 100 | 100 | 110 | 110 |
| Overall performance (Fuel efficiency + abrasion resistance) | 203 | 210 | 214 | 204 | 202 | 212 | 212 |

**Table 2**

| | Comparative example | | | | | | | |
|---|---|---|---|---|---|---|---|---|
| | 1 | 2 | 3 | 4 | 5 | 6 | 7 | 8 |
| Compounding amount (part by mass) | | | | | | | | |
| Russian dandelion-derived natural rubber 1 | 70 | - | 70 | - | 90 | - | 90 | 70 |
| Russian dandelion-derived natural rubber 2 | - | 70 | - | 90 | - | 90 | - | - |
| BR1 | 30 | 30 | - | - | 10 | 10 | - | 30 |
| BR2 | | | 30 | 10 | | - | 10 | |
| Carbon black | 60 | 60 | 60 | 60 | 60 | 60 | 60 | 60 |
| Oil | 5.0 | 5.0 | 5.0 | 5.0 | 5.0 | 5.0 | 5.0 | 5.0 |
| Stearic acid | 2.0 | 2.0 | 2.0 | 2.0 | 2.0 | 2.0 | 2.0 | 2.0 |
| Zinc oxide | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 |
| Antioxidant 1 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 |
| Sulfur | 1.0 | 1.0 | 1.0 | 1.0 | 1.0 | 1.0 | 1.0 | 1.0 |
| Vulcanization accelerator | 1.5 | 1.5 | 1.5 | 1.5 | 1.5 | 1.5 | 1.5 | 1.5 |
| D (nm) | 500 | 380 | 440 | 400 | 580 | 460 | 520 | 500 |
| T (mm) | 8.0 | 8.0 | 8.0 | 8.0 | 8.0 | 8.0 | 8.0 | 8.0 |
| T×D | 4000 | 3040 | 3520 | 3200 | 4640 | 3680 | 4160 | 4000 |
| Content A of Russian dandelion-derived natural rubber (% by mass) | 70 | 70 | 70 | 90 | 90 | 90 | 90 | 70 |
| ΔG* (MPa) | 0.300 | 0.285 | 0.300 | 0.270 | 0.300 | 0.270 | 0.300 | 0.300 |
| ΔG*×T | 2.40 | 2.28 | 2.40 | 2.16 | 2.40 | 2.16 | 2.40 | 2.40 |
| (continued on the next page) | | | | | | | | |
| 70°C tan δ | 0.15 | 0.14 | 0.14 | 0.13 | 0.16 | 0.15 | 0.15 | 0.15 |
| 70°C tan δ×T | 1.20 | 1.12 | 1.12 | 1.04 | 1.28 | 1.20 | 1.20 | 1.20 |
| 30°C tan δ | 0.23 | 0.22 | 0.22 | 0.21 | 0.24 | 0.23 | 0.23 | 0.23 |
| Groove depth of deepest part of circumferential groove (mm) | 2.0 | 2.0 | 2.0 | 2.0 | 2.0 | 2.0 | 2.0 | 2.0 |
| Groove with recessed part | Absence | Absence | Absence | Absence | Absence | Absence | Absence | Presence |
| Land ratio C | 0.75 | 0.75 | 0.75 | 0.75 | 0.75 | 0.75 | 0.75 | 0.75 |
| A×C | 52.5 | 52.5 | 52.5 | 67.5 | 67.5 | 67.5 | 675 | 52.5 |

| Index | | | | | | | | |
|---|---|---|---|---|---|---|---|---|
| Carbon dispersity | 90 | 95 | 90 | 100 | 90 | 100 | 90 | 90 |
| Fuel efficiency | 95 | 96 | 96 | 98 | 96 | 98 | 96 | 100 |
| Abrasion resistance | 98 | 100 | 98 | 98 | 100 | 98 | 96 | 100 |
| Overall performance (Fuel efficiency + abrasion resistance) | 193 | 196 | 194 | 196 | 196 | 196 | 196 | 195 |

**Table 3**

| | Example | | | | Comparative example | | | |
|---|---|---|---|---|---|---|---|---|
| | 8 | 9 | 10 | 11 | 9 | 10 | 11 | 12 |
| Base kneading | | | | | | | | |
| Russian dandelion-derived natural rubber 1 | - | 70 | - | 70 | - | 70 | - | 70 |
| Russian dandelion-derived natural rubber 2 | 70 | - | 70 | - | 70 | - | 70 | - |
| BR1 | - | 30 | 30 | - | - | 30 | 30 | - |
| BR2 | 30 | - | - | 30 | 30 | - | - | 30 |
| Carbon black | 60 | 60 | 60 | 60 | 60 | 60 | 60 | 60 |
| Oil | 5.0 | 5.0 | 5.0 | 5.0 | 5.0 | 5.0 | 5.0 | 5.0 |
| Stearic acid | 2.0 | 2.0 | 2.0 | 2.0 | 2.0 | 2.0 | 2.0 | 2.0 |
| Zinc oxide | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 |
| Antioxidant 1 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 |
| Vulcanization accelerator | 1.5 | 1.5 | 1.5 | 1.5 | - | - | - | - |

| Final kneading | | | | | | | | |
|---|---|---|---|---|---|---|---|---|
| Sulfur | 1.0 | 1.0 | 1.0 | 1.0 | 1.0 | 1.0 | 1.0 | 1.0 |
| Vulcanization accelerator | - | - | - | - | 1.5 | 1.5 | 1.5 | 1.5 |

| Evaluation | | | | | | | | |
|---|---|---|---|---|---|---|---|---|
| Abrasion resistance index | 110 | 105 | 107 | 105 | 100 | 95 | 97 | 95 |

### REFERENCE SIGNS LIST

1. Tire
2. Tread part
3. Sidewall part
4. Bead part
5. Bead core
6. Carcass layer
7. Belt layer
8, 9. Circumferential groove
9. Circumferential groove obtained by combining sipe and hidden groove
10. Groove edge on outermost surface of tread
11. Land part
12. Deepest part of circumferential groove
13. Recessed part
15. Plane
20. Neck part
21. Trunk part
Te. Tread end
TW. Tread width
T. Thickness of tread part
C. Tire equator
H. Groove depth
W1. Groove width
30. Portion corresponding to filler
31. Portion corresponding to butadiene rubber phase
I. Polymer phase interface

## Claims

1. A tire comprising a tread part,
wherein the tread part is composed of a rubber composition comprising a rubber component,
wherein the rubber component comprises a Russian dandelion-derived natural rubber and a butadiene rubber, and
wherein an average domain width D, which is measured by ternarizing an image of the butadiene rubber obtained using an atomic force microscope (AFM), is 370 nm or less.
the average domain width D being a value obtained by ternarizing an image obtained by an atomic force microscope (AFM), extracting a portion corresponding to a filler, and totaling lengths of the remaining polymer phase interfaces, if a filler is present in one polymer phase, the calculation is performed with an extracted portion being filled, and if the filler is located at an interface between two polymer components, the calculation is performed with the portion being extracted.

2. The tire of claim 1, wherein a thickness T of the tread part is 15.0 mm or less, the thickness T of the tread part being a thickness in a direction perpendicular to a tread surface measured on a tire equator in a cross section when a tire is cut along a plane passing through a tire meridian line, when the tire has a circumferential groove on the tire equator, the thickness is a thickness recognized as having the groove filled, the thickness of the tread part being an average value of thicknesses of the tread part as calculated at five positions by rotating the tire by 72° in a circumferential direction.

3. The tire of claims 1 or 2, wherein a product (D×T) of D and the thickness T, in mm, of the tread part is 2,750 or less.

4. The tire of any one of claims 1 to 3, wherein a difference ΔG* between a complex elastic modulus G*a, in MPa, at 0.25% torsional shear at 70°C of the rubber composition and a complex modulus G*b, in MPa, at 1.0% torsional shear at 70°C of the rubber composition is 0.50 MPa or less, G*a being measured using a rheometer ARES manufactured by TA Instruments under a condition of a temperature at 70°C, a frequency of 10 Hz, and a torsional shear of 0.25%, G*b being measured under a condition of a temperature at 70°C, a frequency of 10 Hz, and a torsional shear of 1.0%, wherein a sample for measuring the complex elastic modulus is a disk-shaped vulcanized rubber composition having a diameter of 10 mm and a thickness of 2.0 mm, when the sample is produced by being cut out from a tire, it is cut out from a tread part of the tire so that a tire radial direction becomes a thickness direction.

5. The tire of claim 4, wherein a product (T×ΔG*) of the thickness T, in mm, of the tread part and ΔG* is 5.0 or less.

6. The tire of any one of claims 1 to 5, wherein a tan δ at 70°C (70°C tan δ) of the rubber composition is 0.15 or less, 70°C tan δ being a loss tangent measured using a viscoelasticity measuring device under a condition of a temperature at 70°C, a frequency of 10Hz, an initial strain of 5%, a dynamic strain of ±1%, and an extension mode, a sample for measuring the loss tangent being a vulcanized rubber composition of 20 mm in length × 4 mm in width × 1 mm in thickness, when the sample is produced by being cut out from a tire, it is cut out from a tread part of the tire so that a tire circumferential direction becomes a long side and a tire width direction becomes a thickness direction.

7. The tire of any one of claims 1 to 6, wherein a product (T×70°C tan δ) of the thickness T, in mm, of the tread part and the tan δ at 70°C of the rubber composition is 2.25 or less.

8. The tire of any one of claims 1 to 7, wherein a weight-average molecular weight (Mw) of the Russian dandelion-derived natural rubber as measured by FFF-MALS is 5,000,000 or more, the weight-average molecular weight being determined as defined herein.

9. The tire of any one of claims 1 to 8, wherein a molecular weight distribution (Mw/Mn) of the Russian dandelion-derived natural rubber as measured by FFF-MALS is 2.0 or more.

10. The tire of any one of claims 1 to 9, wherein a tan δ at 30°C (30°C tan δ) of the rubber composition is 0.30 or less.

11. The tire of any one of claims 1 to 10, wherein the tread part is provided with at least one circumferential groove extending continuously in a tire circumferential direction, and wherein a groove depth at the deepest part of the circumferential groove is greater than 1.0 mm and less than 3.0 mm.

12. The tire of any one of claims 1 to 11, wherein the tread part is provided with at least one circumferential groove extending continuously in the tire circumferential direction, and wherein at least one groove wall of the circumferential groove is provided with a recessed part recessed outward in a groove width direction with respect to a groove edge appearing on a tread surface of the tread part.

13. The tire of any one of claims 1 to 12, wherein, in the case where a land ratio of the tread surface of the tread part is defined as C, a product (A×C) of a content A, in % by mass, of the Russian dandelion-derived natural rubber in the rubber component in the rubber composition and C is 81 or less,
the land ratio being a ratio of an actual ground-contacting area to a total ground-contacting area on a grounding surface of a tread part, the total ground-contacting area being an average value of five sites of areas obtained by an outer contour in the ground-contacting shape of the tread part and the actual ground-contacting area being an average value of five sites of areas of ink portions in the ground-contacting shape of the tread part, with the land ratio being obtained by the following equation: 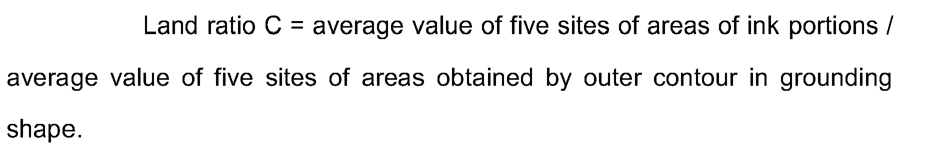 Land ratio C = average value of five sites of areas of ink portions / average value of five sites of areas obtained by outer contour in grounding shape.

14. The tire of any one of claims 1 to 13, wherein the tire is a heavy-duty tire.

15. A method of producing a rubber composition for tire tread that comprises a rubber component comprising a Russian dandelion-derived natural rubber and a butadiene rubber,
wherein an average domain width D, which is measured by ternarizing an image of the butadiene rubber obtained using an atomic force microscope (AFM), of the rubber composition is 370 nm or less, and
wherein the method comprises the step of kneading a rubber component and an additive in a kneading machine equipped with a rotor, the step comprising the substeps of:
(1) charging a raw material comprising a Russian dandelion-derived natural rubber and a vulcanization accelerator into the kneading machine and kneading it, and
(2) kneading the kneaded product obtained in the substep (1) and sulfur,
the average domain width D being a value obtained by ternarizing an image obtained by an atomic force microscope (AFM), extracting a portion corresponding to a filler, and totaling lengths of the remaining polymer phase interfaces, if a filler is present in one polymer phase, the calculation is performed with an extracted portion being filled, and if the filler is located at an interface between two polymer components, the calculation is performed with the portion being extracted.

## Patentansprüche

1. Reifen, der einen Laufflächenteil umfasst,
wobei der Laufflächenteil aus einer Kautschukzusammensetzung besteht, die eine Kautschukkomponente umfasst,
wobei die Kautschukkomponente einen aus russischem Löwenzahn gewonnenen Naturkautschuk und einen Butadienkautschuk umfasst, und
wobei eine durchschnittliche Domänenbreite D, die durch Ternarisierung eines Bildes des Butadienkautschuks, das unter Verwendung eines Atomkraftmikroskops (AFM) erhalten wird, 370 nm oder weniger beträgt.
wobei die durchschnittliche Domänenbreite D ein Wert ist, der erhalten wird durch die Ternarisierung eines mit einem Atomkraftmikroskop (AFM) erhaltenen Bildes, das Extrahieren eines Abschnitts, der einem Füllstoff entspricht, und das Summieren der Längen der verbleibenden Polymerphasen-Grenzflächen, wobei, wenn ein Füllstoff in einer Polymerphase vorhanden ist, die Berechnung unter der Annahme erfolgt, dass der extrahierte Abschnitt gefüllt ist, und wenn sich der Füllstoff an einer Grenzfläche zwischen zwei Polymerkomponenten befindet, die Berechnung unter der Annahme erfolgt, dass der Abschnitt extrahiert ist.

2. Reifen nach Anspruch 1, wobei eine Dicke T des Laufflächenteils 15,0 mm oder weniger beträgt, wobei die Dicke T des Laufflächenteils eine Dicke in einer Richtung senkrecht zur Laufflächenoberfläche ist, gemessen am Reifenäquator in einem Querschnitt, wenn ein Reifen entlang einer Ebene geschnitten wird, die durch eine Reifenmeridianlinie verläuft, wobei, wenn der Reifen eine Umfangsrille am Reifenäquator aufweist, die Dicke eine Dicke ist, bei der erkannt wird, dass die Rille gefüllt ist, wobei die Dicke des Laufflächenteils ein Durchschnittswert der Dicken des Laufflächenteils ist, berechnet an fünf Positionen durch Drehen des Reifens um 72° in Umfangsrichtung.

3. Reifen nach Anspruch 1 oder 2, wobei ein Produkt (D x T) aus D und der Dicke T in mm des Laufflächenteils 2.750 oder weniger beträgt.

4. Reifen nach einem der Ansprüche 1 bis 3, wobei eine Differenz ΔG* zwischen einem komplexen Elastizitätsmodul G*a in MPa bei 0,25 % Torsionsscherung bei 70 °C der Kautschukzusammensetzung und einem komplexen Modul G*b in MPa bei 1,0 % Torsionsscherung bei 70 °C der Kautschukzusammensetzung 0,50 MPa oder weniger beträgt, wobei G*a unter Verwendung eines Rheometers ARES, hergestellt von TA Instruments, unter der Bedingung einer Temperatur von 70 °C, einer Frequenz von 10 Hz und einer Torsionsscherung von 0,25 % gemessen wird, wobei G*b unter der Bedingung einer Temperatur von 70 °C, einer Frequenz von 10 Hz und einer Torsionsscherung von 1,0 % gemessen wird, wobei eine Probe zur Messung des komplexen Elastizitätsmoduls eine scheibenförmige vulkanisierte Kautschukzusammensetzung mit einem Durchmesser von 10 mm und einer Dicke von 2,0 mm ist, wobei, wenn die Probe durch Ausschneiden aus einem Reifen hergestellt wird, sie aus einem Laufflächenteil des Reifens ausgeschnitten wird, so dass die Radialrichtung des Reifens zur Dickenrichtung wird.

5. Reifen nach Anspruch 4, wobei das Produkt (T x ΔG*) aus der Dicke T, in mm, des Laufflächenteils und ΔG* 5,0 oder weniger beträgt.

6. Reifen nach einem der Ansprüche 1 bis 5, wobei ein tan δ bei 70 °C (70 °C tan δ) der Kautschukzusammensetzung 0,15 oder weniger beträgt, wobei 70 °C tan δ ein Verlustfaktor ist, der unter Verwendung einer Viskoelastizitätsmessvorrichtung unter folgenden Bedingungen gemessen wird: Temperatur von 70 °C, Frequenz von 10 Hz, Anfangsdehnung von 5 %, dynamische Dehnung von ±1 % und Dehnungsmodus, wobei die Probe zur Messung des Verlustfaktors eine vulkanisierte Kautschukzusammensetzung mit einer Länge von 20 mm × einer Breite von 4 mm × einer Dicke von 1 mm ist, wobei, wenn die Probe durch Ausschneiden aus einem Reifen hergestellt wird, sie aus einem Laufflächenteil des Reifens so ausgeschnitten wird, dass die Reifenumfangsrichtung zur Längsseite und die Reifenbreitenrichtung zur Dickenrichtung wird.

7. Reifen nach einem der Ansprüche 1 bis 6, wobei ein Produkt (T x 70 °C tan δ) aus der Dicke T in mm des Laufflächenteils und dem tan δ bei 70 °C der Kautschukzusammensetzung 2,25 oder weniger beträgt.

8. Reifen nach einem der Ansprüche 1 bis 7, wobei das gewichtsmittlere Molekulargewicht (Mw) des aus russischem Löwenzahn gewonnenen Naturkautschuks, gemessen mittels FFF-MALS, 5.000.000 oder mehr beträgt, wobei das gewichtsmittlere Molekulargewicht wie hierin definiert bestimmt wird.

9. Reifen nach einem der Ansprüche 1 bis 8, wobei die Molekulargewichtsverteilung (Mw/Mn) des aus russischem Löwenzahn gewonnenen Naturkautschuks, gemessen mittels FFF-MALS, 2,0 oder mehr beträgt.

10. Reifen nach einem der Ansprüche 1 bis 9, wobei ein tan δ bei 30 °C (30 °C tan δ) der Kautschukzusammensetzung 0,30 oder weniger beträgt.

11. Reifen nach einem der Ansprüche 1 bis 10, wobei der Laufflächenteil mit mindestens einer Umfangsrille vorgesehen ist, die sich kontinuierlich in einer Reifenumfangsrichtung erstreckt, und wobei die Rillentiefe an der tiefsten Stelle der Umfangsrille größer als 1,0 mm und kleiner als 3,0 mm ist.

12. Reifen nach einem der Ansprüche 1 bis 11, wobei der Laufflächenteil mit mindestens einer Umfangsrille vorgesehen ist, die sich kontinuierlich in der Reifenumfangsrichtung erstreckt, und wobei mindestens eine Rillenwand der Umfangsrille mit einem vertieften Teil vorgesehen ist, der in einer Rillenbreitenrichtung in Bezug auf eine Rillenkante nach außen vertieft ist, die an einer Laufflächenoberfläche des Laufflächenteils auftritt.

13. Reifen nach einem der Ansprüche 1 bis 12, wobei, falls ein Flächenverhältnis der Laufflächenoberfläche des Laufflächenteils als C definiert ist, ein Produkt (A x C) aus dem Massenanteil A in Massenprozent des aus dem russischen Löwenzahn gewonnenen Naturkautschuks in der Kautschukkomponente der Kautschukzusammensetzung und C 81 oder weniger beträgt,
wobei das Flächenverhältnis das Verhältnis der tatsächlichen Bodenkontaktfläche zur Gesamt-Bodenkontaktfläche an einer Aufstandsfläche eines Laufflächenteils ist, wobei die Gesamt-Bodenkontaktfläche ein Durchschnittswert von fünf Stellen der Flächen ist, die durch eine Außenkontur in der Bodenkontaktform des Laufflächenteils erhalten werden, und die tatsächliche Bodenkontaktfläche ein Durchschnittswert von fünf Stellen der Flächen von Tintenanteilen in der Bodenkontaktform des Laufflächenteils ist, wobei sich das Flächenverhältnis aus der folgenden Gleichung ergibt: 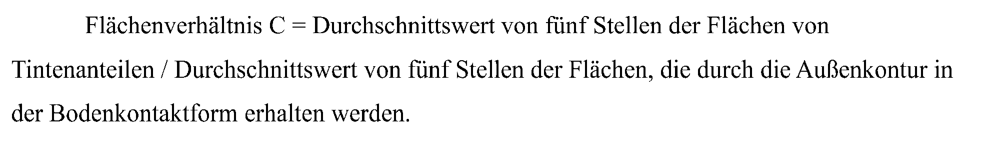 Flächenverhältnis C = Durchschnittswert von fünf Stellen der Flächen von Tintenanteilen / Durchschnittswert von fünf Stellen der Flächen, die durch die Außenkontur in der Bodenkontaktform erhalten werden.

14. Reifen nach einem der Ansprüche 1 bis 13, wobei es sich bei dem Reifen um einen Schwerlastreifen handelt.

15. Verfahren zur Herstellung einer Kautschukzusammensetzung für eine Reifenlauffläche, die eine Kautschukkomponente umfasst, die einen aus russischem Löwenzahn gewonnenen Naturkautschuk und einen Butadienkautschuk umfasst,
wobei eine durchschnittliche Domänenbreite D, die gemessen wird durch die Ternarisierung eines unter Verwendung eines Atomkraftmikroskops (AFM) erhaltenen Bildes des Butadienkautschuks der Kautschukzusammensetzung, 370 nm oder weniger beträgt, und
wobei das Verfahren den Schritt des Knetens einer Kautschukkomponente und eines Additivs in einer mit einem Rotor ausgestatteten Knetmaschine umfasst, wobei der Schritt die folgenden Teilschritte umfasst:
(1) Einfüllen eines Rohmaterials, das einen aus russischem Löwenzahn gewonnenen Naturkautschuk und einen Vulkanisationsbeschleuniger umfasst, in die Knetmaschine und Kneten desselben, und
(2) Kneten des im Teilschritt (1) erhaltenen Knetprodukts und Schwefel,
wobei die durchschnittliche Domänenbreite D ein Wert ist, der erhalten wird durch die Ternarisierung eines mit einem Rasterkraftmikroskop (AFM) erhaltenen Bildes, das Extrahieren eines Abschnitts, der einem Füllstoff entspricht, und das Summieren der Längen der verbleibenden Polymerphasen-Grenzflächen, wobei, wenn ein Füllstoff in einer Polymerphase vorhanden ist, die Berechnung unter der Annahme erfolgt, dass der extrahierte Abschnitt gefüllt ist, und wenn sich der Füllstoff an einer Grenzfläche zwischen zwei Polymerkomponenten befindet, die Berechnung unter der Annahme erfolgt, dass der Abschnitt extrahiert ist.

## Revendications

1. Pneu comprenant une partie bande de roulement,
la partie bande de roulement étant composée d'une composition de caoutchouc comprenant un composant caoutchouc,
le composant caoutchouc comprenant un caoutchouc naturel dérivé du pissenlit russe et un caoutchouc butadiène, et
une largeur moyenne de domaine D, mesurée par ternarisation d'une image du caoutchouc butadiène obtenue à l'aide d'un microscope à force atomique (AFM), étant inférieure ou égale à 370 nm ;
la largeur moyenne de domaine D étant une valeur obtenue par ternarisation d'une image obtenue par microscope à force atomique (AFM), par extraction d'une partie correspondant à une charge et par addition des longueurs des interfaces des phases polymères restantes, si une charge est présente dans une phase polymère, le calcul est effectué avec une partie extraite qui est chargée, et si la charge est située à une interface entre deux composants polymères, le calcul est effectué avec la partie qui est extraite.

2. Pneu selon la revendication 1, dans lequel l'épaisseur T de la partie bande de roulement est inférieure ou égale à 15,0 mm, ladite épaisseur T de la partie bande de roulement étant une épaisseur dans une direction perpendiculaire à une surface de bande de roulement mesurée sur l'équateur du pneu dans une section transversale lorsqu'un pneu est coupé le long d'un plan passant par une ligne méridienne du pneu, lorsque le pneu présente une rainure circonférentielle sur l'équateur du pneu, l'épaisseur est une épaisseur pour laquelle la rainure est considérée remplie, l'épaisseur de la partie bande de roulement étant une valeur moyenne des épaisseurs de la partie bande de roulement calculée en cinq positions par rotation du pneu de 72° dans une direction circonférentielle.

3. Pneu selon la revendication 1 ou 2, dans lequel le produit (D x T) de D et de l'épaisseur T, en mm, de la partie bande de roulement est inférieur ou égal à 2750.

4. Pneu selon l'une quelconque des revendications 1 à 3, dans lequel une différence ΔG* entre un module élastique complexe G*a, en MPa, à un cisaillement en torsion de 0,25 % à 70 °C de la composition de caoutchouc et un module complexe G*b, en MPa, à un cisaillement par torsion de 1,0 % à 70 °C de la composition de caoutchouc est de 0,50 MPa ou moins, G*a étant mesuré à l'aide d'un rhéomètre ARES fabriqué par TA Instruments dans des conditions de température à 70 °C, de fréquence de 10 Hz et de cisaillement par torsion de 0,25 %, G*b étant mesuré dans des conditions de température à 70 °C, de fréquence de 10 Hz et de cisaillement par torsion de 1,0 %, un échantillon permettant de mesurer le module élastique complexe consistant en une composition de caoutchouc vulcanisé en forme de disque ayant un diamètre de 10 mm et une épaisseur de 2,0 mm, lorsque l'échantillon est produit en étant découpé dans un pneu, il est découpé dans une partie de la bande de roulement du pneu de telle sorte que la direction radiale du pneu représente la direction de l'épaisseur.

5. Pneu selon la revendication 4, dans lequel un produit (T x ΔG*) de l'épaisseur T, en mm, de la partie bande de roulement et de ΔG* est inférieur ou égal à 5,0.

6. Pneu selon l'une quelconque des revendications 1 à 5, dans lequel la tan δ à 70 °C (tan δ 70 °C) de la composition de caoutchouc est inférieure ou égale à 0,15, la tan δ à 70 °C étant la tangente de perte mesurée à l'aide d'un dispositif de mesure de la viscoélasticité dans des conditions de température de 70 °C, de fréquence de 10 Hz, de déformation initiale de 5 %, de déformation dynamique de ±1 % et d'un mode d'extension, un échantillon permettant de mesurer la tangente de perte étant une composition de caoutchouc vulcanisé de 20 mm de longueur x 4 mm de largeur x 1 mm d'épaisseur, lorsque l'échantillon est produit en étant découpé dans un pneu, il est découpé dans une partie de la bande de roulement du pneu de telle sorte que la direction circonférentielle du pneu représente un côté long et que la direction de la largeur du pneu représente une direction de l'épaisseur.

7. Pneu selon l'une quelconque des revendications 1 à 6, dans lequel un produit (T x tan δ 70 °C) de l'épaisseur T, en mm, de la partie bande de roulement et de la tan δ à 70 °C de la composition de caoutchouc est inférieur ou égal à 2,25.

8. Pneu selon l'une quelconque des revendications 1 à 7, dans lequel la masse moléculaire moyenne en poids (Mw) du caoutchouc naturel dérivé du pissenlit russe, mesurée par FFF-MALS, est supérieure ou égale à 5 000 000, ladite masse moléculaire moyenne en poids étant déterminée de la manière définie dans la description.

9. Pneu selon l'une quelconque des revendications 1 à 8, dans lequel la distribution de masse moléculaire (Mw/Mn) du caoutchouc naturel dérivé du pissenlit russe, mesurée par FFF-MALS, est supérieure ou égale à 2,0.

10. Pneu selon l'une quelconque des revendications 1 à 9, dans lequel la tan δ à 30 °C (tan δ 30 °C) de la composition de caoutchouc est inférieure ou égale à 0,30.

11. Pneu selon l'une quelconque des revendications 1 à 10, dans lequel la partie bande de roulement est pourvue d'au moins une rainure circonférentielle s'étendant de manière continue dans la direction circonférentielle du pneu, et la profondeur de rainure au niveau de la partie la plus profonde de la rainure circonférentielle étant supérieure à 1,0 mm et inférieure à 3,0 mm.

12. Pneu selon l'une quelconque des revendications 1 à 11, dans lequel la partie bande de roulement est pourvue d'au moins une rainure circonférentielle s'étendant de manière continue dans la direction circonférentielle du pneu, et dans lequel au moins une paroi de la rainure circonférentielle est pourvue d'une partie évidée en retrait vers l'extérieur dans la direction de la largeur de la rainure par rapport à un bord de rainure apparaissant sur une surface de bande de roulement de la partie bande de roulement.

13. Pneu selon l'une quelconque des revendications 1 à 12, dans lequel, dans le cas où un rapport plein/vide de la surface de bande de roulement de la partie bande de roulement est défini par C, un produit (A x C) d'une teneur A, en pourcentage en masse, en caoutchouc naturel dérivé du pissenlit russe du composant caoutchouc de la composition de caoutchouc et de C est inférieur ou égal à 81 ;
le rapport plein/vide étant un rapport entre une zone de contact réelle avec le sol et une zone de contact totale avec le sol sur la surface du sol d'une partie bande de roulement, la zone de contact totale avec le sol étant une valeur moyenne de cinq emplacements de zones obtenues par un contour extérieur dans la forme en contact avec le sol de la partie bande de roulement et la zone de contact réelle avec le sol étant une valeur moyenne de cinq emplacements de zones de portions encrées dans la forme en contact avec le sol de la partie bande de roulement, ledit rapport plein/vide étant obtenu par l'équation suivante : 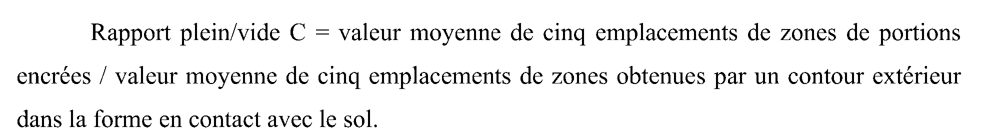 Rapport plein/vide C = valeur moyenne de cinq emplacements de zones de portions encrées / valeur moyenne de cinq emplacements de zones obtenues par un contour extérieur dans la forme en contact avec le sol.

14. Pneu selon l'une quelconque des revendications 1 à 13, dans lequel le pneu est un pneu pour machinerie lourde.

15. Procédé de production d'une composition de caoutchouc pour bande de roulement de pneu qui comprend un composant caoutchouc comprenant un caoutchouc naturel dérivé du pissenlit russe et un caoutchouc butadiène ;
une largeur moyenne de domaine D, mesurée par ternarisation d'une image du caoutchouc butadiène obtenue à l'aide d'un microscope à force atomique (AFM), de la composition de caoutchouc étant inférieure ou égale à 370 nm, et
le procédé comprenant l'étape consistant à pétrir un composant caoutchouc et un additif dans une machine de pétrissage équipée d'un rotor, ladite étape comprenant les sous-étapes consistant à :
(1) charger une matière première comprenant un caoutchouc naturel dérivé du pissenlit russe et un accélérateur de vulcanisation dans la machine de pétrissage et la pétrir, et
(2) pétrir le produit pétri obtenu lors de la sous-étape (1) et du soufre ;
la largeur moyenne de domaine D étant une valeur obtenue par ternarisation d'une image obtenue par microscope à force atomique (AFM), par extraction d'une partie correspondant à une charge et par addition des longueurs des interfaces des phases polymères restantes, si une charge est présente dans une phase polymère, le calcul est effectué avec une partie extraite qui est chargée, et si la charge est située à une interface entre deux composants polymères, le calcul est effectué avec la partie qui est extraite.
